Europäisches Patentamt

European Patent Office

Office européen des brevets

(11) Numéro de publication: **0 323 776**

**A1**

## (12) DEMANDE DE BREVET EUROPEEN

(21) Numéro de dépôt: 88403217.8

(22) Date de dépôt: 16.12.88

(51) Int. Cl.4: **B29D 22/00** , **F17C 1/16** , **B29C 67/14** , **B29C 67/18**

(30) Priorité: 18.12.87 FR 8717758

(43) Date de publication de la demande:
12.07.89 Bulletin 89/28

(84) Etats contractants désignés:
AT BE CH DE ES FR GB GR IT LI LU NL SE

(71) Demandeur: BERTIN & CIE
Zone Industrielle Boîte postale 3
F-78373 Plaisir Cédex(FR)

(72) Inventeur: Lamirand, Jean-Louis Raymond
11 Avenue Saint-Charles
F-78580 Maule(FR)
Inventeur: Viton, Daniel
6 Allée du Canada
F-91430 Igny(FR)
Inventeur: Boscariol, Claude Pierre
10 Square Frédéric Mistral
F-78760 Pontchartrain(FR)

(74) Mandataire: Ramey, Daniel et al
Cabinet Ores 6 Avenue de Messine
F-75008 Paris(FR)

(54) Bouteille en matériau composite, son procédé et son dispositif de fabrication.

(57) Procédé et dispositif de fabrication d'une bouteille en matériau composite, en particulier pour le stockage de gaz à très haute pression, comprenant un manchon (20) en élastomère dont les extrémités sont serrées sur deux embouts (10,12), et qui est recouvert de plusieurs tresses tubulaires imprégnées d'une résine polymérisable injectée à l'intérieur d'un moule (34). Une surpression relative à l'intérieur du manchon (20) permet d'appliquer celui-ci et la tresse sur la paroi interne du moule.

FIG. 2

## BOUTEILLE EN MATERIAU COMPOSITE, SON PROCEDE ET SON DISPOSITIF DE FABRICATION

L'invention concerne une bouteille en matériau composite, en particulier pour le stockage de gaz à très haute pression, ainsi qu'un procédé et un dispositif de fabrication de cette bouteille.

On connaît déjà des réservoirs ou des bouteilles en matériau composite qui sont réalisées au moyen de fibres imprégnées de résine, bobinées sur une enveloppe métallique interne étanche.

Quand on met le réservoir sous pression, cette enveloppe métallique interne suit l'expansion du matériau composite et forme barrière d'étanchéité.

De tels réservoirs sont très coûteux, d'une part parce que l'enveloppe métallique interne est de fabrication complexe et coûteuse, d'autre part parce que le bobinage des fibres doit être effectué au moyen de machines spéciales, également très coûteuses.

L'invention a pour objet une bouteille en matériau composite, en particulier pour le stockage de gaz à haute ou très haute pression, qui puisse être produite à un prix de revient relativement très faible par rapport à celui des bouteilles comparables de la technique antérieure

Elle a également pour objet un procédé et un dispositif de fabrication d'une telle bouteille, permettant d'éviter les inconvénients précités de la technique antérieure en faisant appel à des moyens simples et peu coûteux.

Elle propose, à cet effet, une bouteille en matériau composite pour le stockage de fluide à haute ou très haute pression, comprenant une paroi tubulaire en matériau composite résine-fibres, et un manchon en élastomère ou analogue formant un revêtement interne étanche de ladite paroi, caractérisée en ce que cette paroi est formée de fibres entrecroisées noyées dans la résine et interrompues aux extrémités de la paroi, ces dernières étant conformées en col et chacune appliquées à étanchéité, avec le manchon d'élastomère, sur un embout inséré dans l'extrémité correspondante du manchon en élastomère, chaque embout comprenant une partie extérieure de forme cylindrique et une partie annulaire évasée située à l'intérieur de la bouteille.

Le prix de revient d'une telle bouteille est environ du quart de celui d'une bouteille comparable à la technique antérieure. En outre, la bouteille selon l'invention peut avoir des formes qui seraient irréalisables dans la technique antérieure, par exemple une forme incurvée en arc de cercle ou à section non circulaire, en fonction des utilisations prévues.

Avantageusement, la paroi de matériau composite de cette bouteille est formée de tresses tubulaires coaxiales de fils ou de fibres, qui sont enfilées les unes sur les autres et noyées dans la résine.

Une telle structure est aussi résistante qu'une structure à fibres bobinées, tout en étant beaucoup plus simple et plus rapide à réaliser.

Selon encore d'autres caractéristiques de l'invention, un des embouts comprend un orifice axial traversant formant passage de fluide, et l'autre embout comprend un logement axial borgne débouchant à l'intérieur de la bouteille pour recevoir l'extrémité d'une tige entretoise, l'orifice traversant du premier embout étant à surface interne filetée pour le vissage de l'autre extrémité de la tige entretoise.

Cette tige entretoise permet d'écarter les deux embouts et de maintenir entre eux une distance prédéterminée, aussi bien pendant le processus de fabrication qu'en cours d'utilisation de la bouteille.

L'invention propose également un procédé de fabrication d'une telle bouteille, caractérisé en ce qu'il consiste à monter les extrémités d'un manchon d'élastomère ou de matière analogue sur deux embouts opposés, à disposer autour du manchon au moins une couche tubulaire de fils ou de fibres en matière synthétique ou minérale, à placer l'ensemble dans un moule dont la surface interne définit la forme de la bouteille à obtenir, à écarter l'un de l'autre les deux embouts et à établir dans le moule une différence de pression entre l'intérieur et l'extérieur du manchon tendant à appliquer ce manchon et la couche de fils ou de fibres sur la surface interne du moule, à injecter une résine polymérisable dans le moule à l'extérieur du manchon pour en imprégner les fils ou fibres, et à polymériser cette résine.

Selon un mode de réalisation préféré de l'invention, pour disposer les fils ou fibres précités autour du manchon, on enfile sur celui-ci des tresses tubulaires coaxiales de fils ou de fibres.

Selon encore une autre caractéristique de l'invention, les deux embouts précités sont reliés par une tige rigide, dont une extrémité s'appuie sur l'un des embouts et dont l'autre extrémité est vissée à travers l'autre embout.

Un tel procédé ne nécessite pas l'utilisation de moyens spéciaux et est au contraire basé sur la mise en oeuvre d'une technologie simple, à investissement réduit et n'exigeant pas de machine spéciale.

L'invention propose également un dispositif de fabrication d'un réservoir ou d'une bouteille en matériau composite, en particulier pour le stockage de gaz à haute ou très haute pression, caractérisé en ce qu'il comprend deux embouts à collet annulaire évasé, un manchon en élastomère ou en matière étanche analogue, un moule à la forme de la bouteille à obtenir, des moyens pour enfiler les embouts dans les extrémités du manchon, des moyens pour écarter l'un de l'autre les embouts, des moyens pour établir dans le moule une différence de pression entre l'intérieur et l'extérieur du manchon monté avec une couche externe de fils ou de fibres sur les embouts, afin d'appliquer cette couche de fils ou fibres sur la paroi interne du moule, des moyens pour injecter sous pression une résine dans le moule entre le manchon et la surface interne du moule, et des moyens pour polymériser la résine.

Avantageusement, les moyens pour établir une différence de pression dans le moule comprennent une pompe à vide, raccordée à l'espace compris entre le manchon et la surface du moule.

De préférence, les embouts sont reliés entre eux et écartés l'un de l'autre par une tige rigide, éventuellement amovible, qui peut comprendre un passage de communication entre l'espace interne du manchon et l'extérieur du moule et permet alors, soit de faire régner la pression atmosphérique ambiante à l'intérieur du manchon, soit de mettre ce manchon en surpression.

D'autres caractéristiques, détails et avantages de l'invention apparaîtront à la lecture de la description qui suit, donnée à titre d'exemple et faite en référence aux dessins annexés, dans lesquels :

la figure 1 est une vue schématique en coupe partielle d'une bouteille selon l'invention ;

la figure 2 est une vue schématique en coupe partielle du dispositif de fabrication d'une bouteille selon l'invention ;

les figures 3, 4 et 5 sont des vues schématiques en coupe partielle de variantes de réalisation de bouteilles selon l'invention.

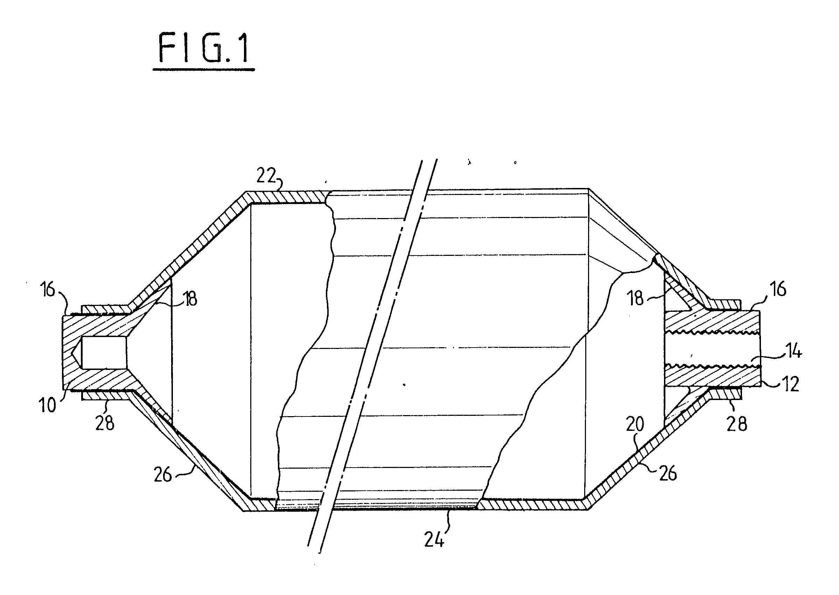

On se réfère d'abord à la figure 1 pour décrire la structure générale de la bouteille selon l'invention.

Cette bouteille, ou réservoir de capacité faible ou moyenne (par exemple de 0,5 à 12 litres) comprend un embout 10 de fond et un embout 12 de tête ou de goulot, comprenant un passage axial traversant 14 qui forme orifice de remplissage et de vidange de la bouteille, et qui est de préférence fileté intérieurement.

Chaque embout 10, 12 comprend une extrémité cylindrique 16, extéreure à la bouteille et une extrémité opposée 18 de forme évasée, par exemple tronconique, allant en s'élargissant dans la direction opposée à l'extrémité cylindrique 16.

La bouteille comprend encore un manchon tubulaire 20 souple ou élastiquement déformable, en élastomère ou en matière étanche analogue appropriée (caoutchouc naturel, silicone, caoutchouc synthétique...) qui forme une enveloppe interne de la bouteille et dont les extrémités sont montées à étanchéité sur les embouts 10 et 12. La paroi 22 proprement dite de la bouteille est en matériau composite (fibres + résine) et, dans l'exemple représenté, comprend une partie intermédiaire cylindrique 24 raccordée par deux parties tronconiques 26 à deux extrémités cylindriques 28 entourant les extrémités cylindriques 16 des embouts 10, 12. Plus précisément, cette paroi 22 de matériau composite comprend plusieurs tresses tubulaires, enfilées les unes sur les autres, de fils ou fibres de matière appropriée qui sont imprégnées d'une résine telle qu'une résine époxy. Les tresses tubulaires utilisées sont de préférence en fils ou fibres de verre pour des raisons de prix de revient, mais peuvent être en fibre de carbone, en fibre aramide commercialisée sous le nom kevlar, etc... Les tresses tubulaires de fibre de verre sont disponibles dans le commerce et sont caractérisées par un angle de croisement des fils de l'ordre de 50° à 55° par exemple, ce qui correspond à une résistance mécanique maximale du produit final. Le nombre de tresses peut varier entre 3 et 10 environ. De préférence, l'angle de croisement des fils des tresses est déterminé pour être constant lorsque les tresses sont enfilées les unes sur les autres pour constituer la paroi 22 de la bouteille selon l'invention.

Les extrémités cylindriques 28 de la paroi 22 et celles du manchon 20 en élastomère sont maintenues à étanchéité sur les extémités cylindriques 16 des embouts par tout moyen approprié : par exemple par frettage, ou encore au moyen de rubans annulaires de tresses de fibre de verre ou une autre matière appropriée, qui sont serrés sur les extrémités cylindriques des embouts et imprégnés de résine.

Pour faciliter ce maintien, les extrémités 16 des embouts pourraient être légèrement tronconiques, en s'élargissant vers l'extérieur, ou être striées, ou rainurées. Les extrémités tronconiques 28 de la bouteille ont une plus grande densité de fibres que sa partie cylindrique 24 et sont ainsi renforcées.

Une bouteille selon l'invention est destinée en particulier au stockage de gaz sous très haute pression, de plusieurs centaines de bars par exemple.

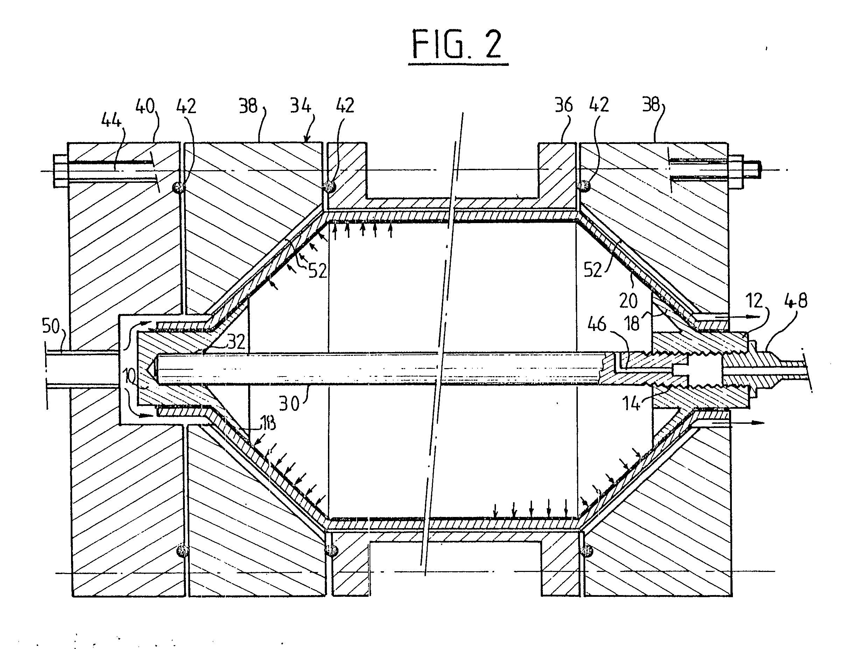

On se réfère maintenant à la figure 2 qui représente schématiquement un dispositif de fabrication d'une bouteille selon l'invention.

On retrouve en figure 2 les embouts 10 et 12, et le manchon 20 en élastomère dont les extrémités sont enfilées sur les embouts 10 et 12. Ces derniers sont reliés entre eux par une tige rigide 30 dont une extrémité est reçue dans un logement borgne 32 de l'embout 10 et dont l'autre extrémité est filetée et vissée dans le passage axial 14 de l'embout 12.

L'ensemble embouts 10, 12-tige 30-manchon 20, sur lequel ont été enfilées des tresses tubulaires de fibres de verre (par exemple), est placé dans un moule 34 comprenant une partie intermédiaire 36 à surface interne cylindrique correspondant à la partie cylindrique de la bouteille obtenue, deux parties 38 à surface interne tronconique correspondant aux parties tronconiques 26 de la bouteille obtenue et au moins une partie d'extrémité 40 coiffant l'embout 10 de la bouteille. Des joints d'étanchéité 42 sont prévus entre les diverses parties 36, 38, 40 du moule, qui sont reliées entre elles par des tirants 44.

La tige filetée 30 permet, par vissage et dévissage dans l'embout 12, d'ajuster la distance entre les embouts pour que les parties du manchon 20 et des tresses tubulaires qui recouvrent les parties tronconiques 18 des embouts soient serrées sur les surfaces tronconiques des parties 38 du moule.

Avantageusement, la tige filetée 30 comprend au moins un canal 46 dont une extrémité débouche sur sa surface périphérique entre les embouts, à l'intérieur du manchon 20, et dont l'autre extrémité débouche à l'extrémité de la tige 30 qui se trouve vissée dans l'embout 12. Ce canal 46 établit donc une communication entre l'intérieur du manchon 20 et l'extérieur du moule 34, par exemple par l'intermédiaire d'un raccord 48 vissé dans l'extrémité libre du passage 14 de l'embout 12.

La partie 40 d'extrémité du moule 34 comprend un conduit 50 d'amenée d'une résine, telle qu'une résine époxy, relativement fluide, à l'intérieur du moule 34, dans l'espace entourant l'embout 10 de fond de la bouteille à obtenir.

Le procédé de fabrication de la bouteille selon l'invention est le suivant :

Les embouts 10 et 12 reliés par la tige 30 sont mis en place dans les extrémités du manchon 20 d'élastomère ou de matière analogue. Ce manchon peut, soit avoir une forme cylindrique droite à section constante, soit être préformé à la forme de la bouteille otenue.

Les tresses tubulaires (par exemple de fibres de verre) sont tout d'abord enfilées les unes sur les autres en nombre voulu, puis l'ensemble de ces tresses est enfilé sur le manchon 20 et les embouts 10, 12. L'ébauche de bouteille ainsi obtenue est placée dans le moule 34, dont les différentes parties sont ensuite serrées les unes sur les autres au moyen des tirants 44. La tige 30 permet d'appliquer à pression les parties tronconiques 18 des embouts sur les surfaces internes tronconiques des parties de moule 38, ce qui réalise une étanchéité du montage des extrémités du manchon 20 sur les embouts 10, 12.

Le moule 34 est ensuite raccordé à une pompe à vide ou placé dans une enceinte raccordée à une pompe à vide, tandis que le volume interne du manchon 20 est relié, par l'intermédiaire du ou des canaux 46 de la tige 30, à l'atmosphère ambiante pour rester à la pression atmosphérique. Par fonctionnement de la pompe à vide, la dépression qui s'établit dans le moule 34 a pour effet de créer une dépression dans l'espace compris entre la surface interne du moule 34 et le manchon 20, et également d'amener, par aspiration dans le conduit 50, la résine à l'intérieur du moule. La pression atmosphérique régnant à l'intérieur du manchon 20 plaque les tresses tubulaires sur la surface interne du moule. La résine aspirée dans le moule circule entre les fils ou fibres des tresses, jusqu'à les imprégner complètement et gagne l'extrémité opposée du moule. Pour faciliter la circulation de la résine, on peut prévoir, comme représenté schématiquement en figure 2, des canaux très fins 52 dans les surfaces internes tronconiques des parties de moule 38. On peut également prévoir une gorge annulaire entre la première partie de moule 38 et la partie intermédiaire 36, cette gorge se remplissant de résine et permettant une imprégnation plus uniforme des tresses tubulaires dans la partie intermédiaire cylindrique de la bouteille et dans sa seconde partie tronconique.

Lorsque les tresses tubulaires sont complètement imprégnées de résine, on casse le vide dans le moule 34 et on place celui-ci dans une étuve pour polymériser la résine. On peut également relier alors l'espace interne du manchon 20, par l'intermédiaire du canal 46 et de la tige 30 à une source de gaz sous pression, pour faire régner une surpression à l'intérieur du manchon 20. La qualité du matériau composite ainsi obtenu est améliorée. Pour fixer les idées, on indiquera, à titre d'exemple, que la polymérisation d'une résine époxy peut être réalisée en une heure environ, à une température de 120°C et une pression de trois bars à l'intérieur du manchon 20. En variante, le moule peut être équipé de résistances électriques de chauffage, pour la polymérisation de la résine.

Lorsque la polymérisaton de la résine est terminée, on démonte la partie 38 avant à surface tronconique du moule, et on extrait la bouteille terminée. La tige 30 peut être laissée telle qu'elle est, pour maintenir les embouts 10, 12 en place, ou bien elle peut être retirée par dévissage. On obtient alors la bouteille représentée en figure 1.

On remarquera que les embouts 10, 12 peuvent être, notamment par leur extrémité cylindrique 16, associés à des moyens appropriés permettant d'exercer sur eux une traction tendant à les écarter l'un de l'autre, ce qui rend superflue la tige entretoise 30 pour la fabrication de la bouteille. Ces moyens peuvent également assurer le positionnement, l'alignement et le centrage des embouts 10, 12 dans le moule 34.

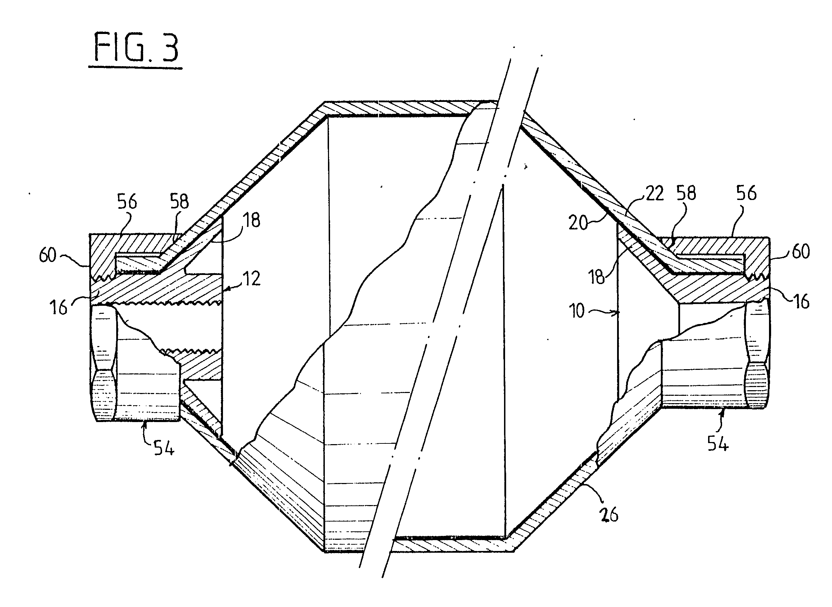

On a représenté en figure 3 une variante de réalisation, dans laquelle les extrémités cylindriques 16 des embouts 10, 12, comprennent un filetage extérieur sur lequel est vissé un bouchon 54 comprenant une jupe cylindrique 56 se terminant, à une extrémité, par une surface tronconique 58 correspondant aux parties tronconiques 26 de la bouteille, et, à son autre extrémité, par un rebord annulaire 60 pourvu d'un filetage intérieur par lequel le bouchon 54 peut être vissé sur l'extrémité cylindrique 16 des embouts 10 et 12. Le vissage du bouchon se traduit par le serrage de chaque partie tronconique 26 de la bouteille entre l'extrémité tronconique 18 de l'embout correspondant et l'extrémité 58 du bouchon.

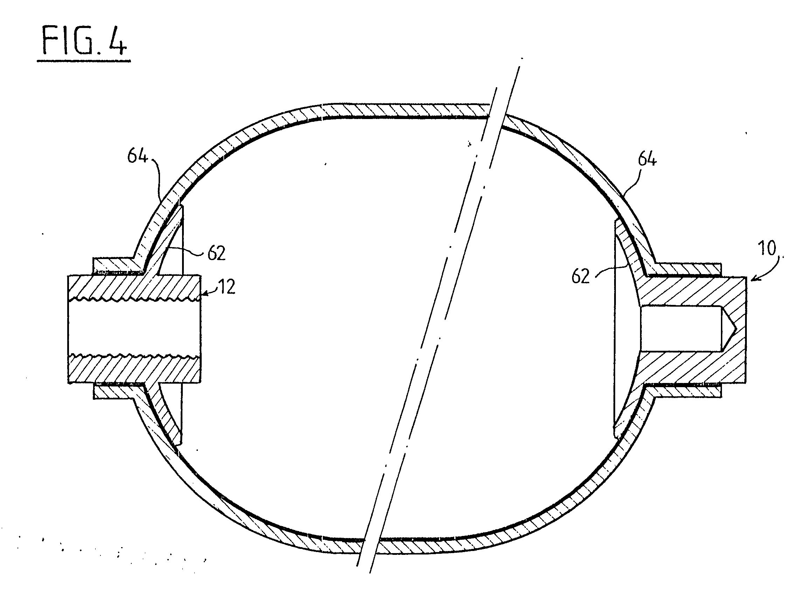

On a représenté en figure 4 une autre variante de réalisation, dans laquelle l'extrémité tronconique 18 des embouts 10, 12 est remplacée par une extrémité 62 en forme de calotte sphérique. On obtient ainsi une bouteille dont les extrémités 64 ont une forme correspondante de calotte sphérique.

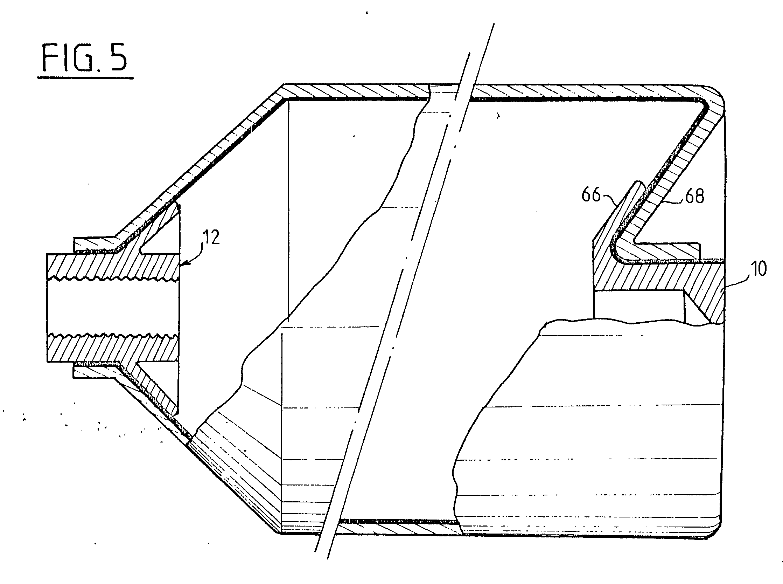

La figure 5 représente une autre variante, dans laquelle l'embout 12 est identique à celui des figures 1 et 2, mais l'embout de fond 10 comprend une extrémité tronconique 66 orientée à l'opposé de l'extrémité tronconique 18 de l'embout 10 des figures 1 et 2. On obtient ainsi une bouteille ayant un fond 68 concave. Cette bouteille peut être stockée verticalement.

Les embouts 10 et 12 sont de préférence métalliques mais peuvent également être réalisés en matière plastique renforcée.

Le procédé et le dispositif selon l'invention permettent de réaliser des bouteilles cylindriques droites à section circulaire, des bouteilles incurvées en arc de cercle, des bouteilles à section non circulaire, etc. La fabrication en série ne pose pas de problèmes particuliers, des enceintes à dépression et des étuves de polymérisation pouvant pouvant être conçues pour contenir plusieurs moules à la fois.

**Revendications**

1) Bouteille en matériau composite pour le stockage de fluide à haute ou très haute pression, comprenant une paroi tubulaire (22) en matériau composite résinefibres, et un manchon (20) en élastomère ou analogue formant un revêtement interne étanche de ladite paroi, caractérisée en ce que ladite paroi (22) est formée de fibres entrecroisées noyées dans la résine et interrompues aux extrémités (28) de la paroi, qui sont conformées en col et qui sont chacune appliquées à étanchéité, avec le manchon d'élastomère (20), sur un embout (10,12) inséré dans l'extrémité correspondante du manchon (20) en élastomère, chaque embout (10,12) comprenant une partie extérieure (16) de forme cylindrique et une partie annulaire évasée (18) située à l'intérieur de la bouteille.

2) Bouteille selon la revendication 1, caractérisée en ce que la paroi (22) est formée de tresses tubulaires coaxiales de fils ou de fibres, enfilées les unes sur les autres et noyées dans la résine.

3) Bouteille selon la revendication 1 ou 2, caractérisée en ce que l'un (10) des embouts comprend un orifice axial traversant (14) formant passage de fluide.

4) Bouteille selon la revendication 3, caractérisée en ce que l'autre embout (12) comprend un logement axial borgne (32) débouchant à l'intérieur de la bouteille pour recevoir l'extrémité d'une tige entretoise (30), l'orifice traversant (14) du premier embout cité (10) étant à surface interne filetée pour le vissage de l'autre extrémité de la tige entretoise (30).

5) Bouteille selon l'une des revendications 1 à 4, caractérisée en ce qu'au moins un des embouts (10,12) comprend des moyens d'application d'une force de traction orientée vers l'extérieur de la bouteille et tendant à l'écarter de l'autre embout.

6) Bouteille selon une des revendication 1 à 5, caractérisée en ce qu'elle comprend, au moins à une de ses extrémités, des moyens de serrage ou d'ancrage de sa paroi tubulaire (22) en matériau composite et de son manchon interne (20) en élastomère sur la surface externe de l'embout correspondant (10,12).

7) Procédé de fabrication d'une bouteille en matériau composite, en particulier du type décrit dans l'une des revendications 1 à 6, caractérisé en ce qu'il !0 consiste à monter les extrémités d'un manchon (20) d'élastomère ou de matière analogue sur deux embouts (10, 12) opposés, à disposer autour du manchon (20) au moins une couche tubulaire de fils ou fibres en matière synthétique ou minérale, à placer l'ensemble dans un moule(34) dont la surface interne définit la forme de la bouteille à obtenir, à écarter l'un de l'autre les deux embouts (10, 12) et à établir dans le moule une différence de pression entre l'intérieur et l'extérieur du manchon (20) tendant à appliquer ce manchon et la couche de fils ou fibres sur la surface interne du moule, à injecter une résine polymérisable dans le moule à l'extérieur du manchon (20), pour en imprégner la couche de fils ou fibres, et à polymériser cette résine.

8) Procédé selon la revendication 7, caractérisé en ce qu'on relie les deux embouts (10, 12) par une tige rigide (30), dont une extrémité appuie sur l'un des embouts et dont l'autre extrémité est vissée à travers l'autre embout.

9) Procédé selon la revendication 7 ou 8, caractérisé en ce que, pour disposer les fils ou fibres autour du manchon (20), on enfile sur ce manchon des tresses tubulaires coaxiales de fils ou de fibres.

10) Procédé selon une des revendication 7 à 9, caractérisé en ce qu'on polymérise la résine par chauffage sous pression à l'intérieur du moule.

11) Procédé selon la revendication 9 ou 10, caractérisé en ce que, pour appliquer la tresse sur la surface interne du moule et injecter la résine à l'intérieur du moule, on met en dépression l'espace compris entre le manchon (20) et la surface interne du moule et on relie l'intérieur du manchon (20) à l'atmosphère ambiante.

12) Procédé selon l'une des revendications 7 à 11: caractérisé en ce que, pour polymériser la résine, on place le moule dans une étuve et on crée une surpression à l'intérieur du manchon (20).

13) Procédé selon la revendication 8, caractérisé en ce que la tige (30) reliant les embouts (10,12) comprend un canal interne (46) reliant l'espace interne du manchon (20) à l'extérieur, et on relie cette extrémité de la tige à l'atmosphère ambiante ou à une source de gaz sous pression.

14) Dispositif de fabrication d'une bouteille en matériau composite, en particulier du type décrit dans l'une des revendications 1 à 6, caractérisé en ce qu'il comprend deux embouts (10,12) à collet annulaire évasé (18), un manchon (20) en élastomère ou en matière étanche analogue, un moule (34) à la forme de bouteille à obtenir, des moyens pour enfiler les embouts dans les extrémités du manchon, des moyens pour écarter l'un de l'autre les embouts, des moyens (46,48) pour établir dans le moule une différence de pression entre l'intérieur et l'extérieur du manchon (20) monté avec une couche externe de fils ou fibres sur les embouts, afin d'appliquer la couche de fils ou fibres sur la paroi interne du moule, des moyens (50) pour injecter sous pression une résine dans le moule entre le manchon (20) et la surface interne du moule, et des moyens pour polymériser la résine.

15) Dispositif selon la revendication 14, caractérisé en ce qu'il comprend une tige rigide (30) d'écartement entre les embouts (10,12).

16) Dispositif selon la revendication 14 ou 15, caractérisé en ce que les moyens pour établir une différence de pression dans le moule (34) comprennent une pompe à vide, raccordée à l'espace compris entre le manchon (20) et la surface interne du moule (34).

17) Dispositif selon la revendication 15, caractérisé en ce que la tige (30) reliant les embouts (10,12) comprend un passage (46) raccordant l'espace interne du manchon (20) à l'extérieur du moule.

18) Dispositif selon l'une des revendications 15 à 17, caractérisé en ce que la tige (30) est filetée et est montée par vissage sur un des embouts.

19) Dispositif selon l'une des revendications 14 à 18, caractérisé en ce que la paroi interne du moule (34) comprend des canaux (52) de circulation de la résine injectée.

FIG.1

EP 0 323 776 A1

FIG. 2

## FIG. 3

EP 0 323 776 A1

FIG.4

EP 0 323 776 A1

FIG. 5

66 68

12

10

EP 0 323 776 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 360 116 (W.D. HUMPRHEY) * En entier * --- | 1-3,6 | B 29 D 22/00 F 17 C 1/16 B 29 C 67/14 B 29 C 67/18 |
| X | US-A-2 848 133 (E.M. RAMBERG) * En entier * | 1-3,4,5 | |
| Y | | 7-19 | |
| X | US-A-3 843 010 (W.G. MORSE) * En entier * --- | 1-4,6 | |
| X | FR-A-1 106 078 (APEX ELECTRICAL) * En entier * | 1-5 | |
| Y | | 7-19 | |
| X | GB-A-1 134 033 (STRUCTURAL FIBERS) * En entier * | 1-4,6 | |
| Y | | 7,9,10, 14 | |
| Y | GB-A-2 119 305 (M & G TRAILERS) * En entier * --- | 7-19 | |
| Y | FR-A- 980 230 (V. HAGOPIAN) * En entier * --- | 7,9-12, 14,16 | |
| Y | US-A-3 832 109 (H.U. RANALLO) * En entier * --- | 7,9-12, 14,16 | |
| Y | GB-A-1 165 343 (FIN PRODUCTS) * En entier * --- | 7,9-12, 14,16 | |
| Y | DE-A-3 011 358 (AUDI NSU) * En entier * --- -/- | 7-10,12 -15,17 | |

**DOMAINES TECHNIQUES RECHERCHES (Int. Cl.4)**

B 29 C
B 29 D
F 17 C

Le présent rapport a été établi pour toutes les revendications

| Lieu de la recherche | Date d'achèvement de la recherche | Examinateur |
|---|---|---|
| LA HAYE | 03-04-1989 | LABEEUW R.C.A. |

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 10, no. 96 (M-469)[2153], 12 avril 1986, page 116 M 469; & JP-A-60 232 918 (NITTO BOSEKI K.K.) 19-11-1985 <br> * Résumé; figures * <br> --- | 7,10-12 ,14 | |
| Y | FR-A-1 320 145 (BACHMANN) <br> * En entier * <br> --- | 7,10-12 ,14 | |
| A | FR-A-2 582 570 (COMMISSARIAT A L'ENERGIE ATOMIQUE) <br> * En entier * <br> --- | 1-3,7-9 ,14,15 | |
| A | FR-A-1 554 072 (E.P. WARNKEN) <br> * Page 2, lignes 20-22; résumé points 1-4; figures * <br> --- | 1-3,5 | |
| A | FR-A-1 554 201 (OMNIPLAST) <br> * En entier * <br> --- | 1-3,7-10,12-15,17 | |
| A | US-A-2 999 780 (L. PERRAULT) <br> --- | | DOMAINES TECHNIQUES RECHERCHES (Int. Cl.4) |
| A | US-A-2 744 043 (E.M. RAMBERG) <br> ----- | | |

Le présent rapport a été établi pour toutes les revendications

| Lieu de la recherche | Date d'achèvement de la recherche | Examinateur |
|---|---|---|
| LA HAYE | 03-04-1989 | LABEEUW R.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons
........................................................
& : membre de la même famille, document correspondant

EPO FORM 1503 03.82 (P0402)